# EUROPÄISCHE PATENTSCHRIFT

(11) **EP 2 577 846 B1**
(45) Veröffentlichungstag und Bekanntmachung des Hinweises auf die Patenterteilung: **04.09.2019**
(21) Anmeldenummer: 11720765.4
(22) Anmeldetag: 20.05.2011
(51) Int. Cl.: H02K 1/27

(54) **PERMANENTMAGNETROTOR FÜR EINE ELEKTRISCHE MASCHINE SOWIE HERSTELLUNGSVERFAHREN UND BLECHLAMELLE EINES SOLCHEN ROTORS**
PERMANENT MAGNET ROTOR FOR AN ELECTRIC MACHINE AND MANUFACTURING METHOD AND LAMINATION SHEET OF SUCH A ROTOR
ROTOR AUX AIMENTS PERMANENTS POUR UNE MACHINE ÉLECTRIQUE AINSI QUE PROCÉDÉ DE FABRICATION ET LAMELLE DE TÔLE D'UN TEL ROTOR

(30) Priorität: 25.05.2010 DE 102010029251
(43) Veröffentlichungstag der Anmeldung: 10.04.2013
(73) Patentinhaber: Robert Bosch GmbH, 70442 Stuttgart (DE)
(72) Erfinder: EVANS, Steven Andrew, 77815 Buehl (DE)
(86) Internationale Anmeldenummer: PCT/EP2011/058231
(87) Internationale Veröffentlichungsnummer: WO 2011/147745

(56) Entgegenhaltungen:
- EP-A2- 1 777 795
- DE-A1-102006 006 882
- DE-A1-102008 041 660
- DE-A1-102008 043 138
- JP-A- 8 163 800

## Beschreibung

### Technisches Gebiet

Die vorliegende Erfindung betrifft elektrische Maschinen mit Komponenten, wie beispielsweise einem Stator oder einem Läufer, die durch eine Stapelung von Blechlamellen aufgebaut sind.

### Stand der Technik

Komponenten für elektrische Maschinen, wie beispielsweise ein Läufer (Rotor) oder ein Stator für eine elektrische Maschine, werden zur Vermeidung von Wirbelströmen häufig als Stapel von zueinander elektrisch isolierten Blechlamellen aufgebaut.

Bei Synchronmaschinen trägt der Läufer Permanentmagnete, mit denen Läuferpole ausgebildet werden. Die Permanentmagnete können auf den Läuferkörper aufgesetzt oder darin eingebettet werden. Ein Läufer mit darin eingebetteten Permanentmagneten wird Läufer mit vergrabenen Permanentmagneten genannt. Der Permanentmagnet definiert in diesem Fall den Läuferpol als den Bereich des Läufers, der dem Stator bzw. an dem Stator angeordneten Statorzähnen zugewandt ist und durch den der magnetische Fluss den Läufer in Richtung des Stators verlässt.

Um einen solchen Läufer durch ein Blechpaket aufbauen zu können, ist es zweckmäßig, die einzelnen Blechlamellen einstückig herzustellen, so dass der an dem vergrabenen Permanentmagneten anliegende Polschuh mit dem Läuferkörper in Verbindung stehen muss. Dies führt dazu, dass die einzelnen Polschuhe über Stege mit einem dem Polschuh bezüglich des Permanentmagneten gegenüber liegenden Kernbereich des Läufers verbunden sind. Jedoch ist hierbei nachteilig, dass die mechanischen Brückenabschnitte auch Brücken hoher magnetischer Leitfähigkeit zwischen benachbarten Polschuhen darstellen. So wird ein Teil des vom Permanentmagneten bereitgestellten magnetischen Flusses nicht über den Luftspalt in Richtung des Stators abgegeben, sondern verläuft innerhalb der Brückenabschnitte zu dem benachbarten Permanentmagneten oder zu dem Kernbereich des Läufers zurück und kann somit nicht zur Erzeugung eines Drehmoments genutzt werden. Diese so genannten magnetischen Leckflüsse können bis zu 30 % des vom Permanentmagneten bereitgestellten magnetischen Flusses betragen.

Um diese Leckflüsse zu reduzieren, wird bei rotatorischen elektrischen Maschinen mit Innenläufer die Dicke des Querschnitts der tangentialen Brückenabschnitte zwischen den Polschuhen reduziert. Dies ist praktikabel, wenn die elektrischen Maschinen für eine geringe Drehgeschwindigkeit ausgelegt sind, da dort die Zentrifugalkräfte vernachlässigbar sind und die mechanische Stabilität nicht kritisch ist. Jedoch ist die minimale Dicke des Brückenabschnitts durch die Dicke der Blechlamellen, mit denen der Läufer aufgebaut wird, bestimmt, da die Blechlamellen üblicherweise gestanzt werden.

Aus dem Stand der Technik sind bislang Herstellungsverfahren bekannt, bei denen verschiedene Blechgeometrien verwendet werden, bei denen ein Teil der Blechlamellen Brückenabschnitte zwischen den Läuferpolen aufweist und ein weiterer Teil der Blechlamellen ohne diese Brückenabschnitte vorgesehen ist. Beim Stapeln dieser Blechlamellen mit verschiedenen Blechgeometrien, z.B. bei einem Stapeln mehrerer Blechlamellen verschiedener Geometrien im Wechsel, entsteht ein Läufer, bei dem im Bereich der Brückenabschnitte zwischen den Läuferpolen Lamellenlagen unbesetzt bleiben. Mit anderen Worten weisen ein Teil der Blechlamellen in den Brückenabschnitten kein Material auf.

Es besteht zudem eine Schwierigkeit darin, in den Blechlamellen, in denen die Brückenabschnitte nicht ausgeführt sind, die Blechlamellen, die die Polschuhe ausbilden sollen, mit dem Läuferkörper so zu verbinden, dass diese gegen Zentrifugalkräfte beim Betrieb der elektrischen Maschine gehalten werden. Dies wird üblicherweise durch das Vorsehen von Rastelementen in dem betreffenden Blechen gelöst, so dass die Blechlamellen miteinander verrastet werden, um einen Zusammenhalt auch gegen Zentrifugalkräfte zu gewährleisten.

Es ist Aufgabe der vorliegenden Erfindung, eine Komponente für eine elektrische Maschine zur Verfügung zu stellen, die durch Stapelung von Blechlamellen aufgebaut ist und bei der der effektive Querschnitt in einem Bereich reduziert ist, ohne dass man zusätzliche Maßnahmen bezüglich einer geeigneten Fixierung der durch diesen Bereich getrennten Blechabschnitte treffen muss. Es ist weiterhin Aufgabe der vorliegenden Erfindung, vorzusehen, dass ein magnetischer Leckfluss in dem Bereich der Komponente reduziert wird.

### Offenbarung der Erfindung

Diese Aufgaben werden durch den Blechlamellensatz zum Aufbau einer Komponente für eine elektrische Maschine gemäß Anspruch 1 sowie durch die Komponente und das Verfahren zum Herstellen der Komponente gemäß den nebengeordneten Ansprüchen gelöst.

Weitere vorteilhafte Ausgestaltungen sind in den abhängigen Ansprüchen angegeben.

Gemäß einem ersten Aspekt ist ein Blechlamellensatz für den Aufbau einer Komponente für eine elektrische Maschine vorgesehen. Der Blechlamellensatz umfasst eine erste Blechlamelle, die einen ersten Bereich und einen zweiten Bereich aufweist, die über einen Verbindungsabschnitt miteinander verbunden sind, und eine zweite Blechlamelle, deren Geometrie im Wesentlichen der Geometrie des zweiten Bereichs entspricht, wobei die erste Blechlamelle einen Faltbereich aufweist, der ganz oder teilweise auf eine Seite des ersten Bereichs der Blechlamelle umfaltbar ist.

Gemäß einem weiteren Aspekt ist eine Komponente für eine elektrische Maschine, die mit dem obigen Blechlamellensatz aufgebaut ist, vorgesehen. Der Faltabschnitt ist auf die Seite des ersten Bereichs der ersten Blechlamelle umgefaltet, wobei die erste und die zweite Blechlamelle aufeinander gestapelt sind, so dass die zweite Blechlamelle an dem zweiten Bereich der ersten Blechlamelle auf der Seite, auf die der Faltbereich auf den ersten Bereich umgefaltet ist, anliegt.

Der obige Blechlamellensatz zum Aufbau der obigen Komponente für eine elektrische Maschine umfasst mindestens eine Blechlamelle, bei der vor dem Stapeln mit der zweiten Blechlamelle ein Abschnitt umgebogen wird. Das Umbiegen erfolgt so, dass der Abschnitt auf dem ersten Bereich der ersten Blechlamelle zu liegen kommt, der im zusammengesetzten Zustand einen den magnetischen Fluss gut leitenden Bereich der Komponente bilden soll. Dadurch wird erreicht, dass die Komponente in einfacher Weise aufgebaut werden kann und gleichzeitig die Verbindungsabschnitte einen verringerten effektiven Querschnitt aufweisen, um dort eine verringerte magnetische Leitfähigkeit zu bewirken.

Die zweite Blechlamelle weist eine Form bezüglich ihrer Blechebene auf, die zumindest teilweise der der Form des zweiten Bereichs entspricht, so dass mit der zweiten Blechlamelle ein weiterer Bereich der ersten Blechlamelle (als Schnittmenge mit dem zweiten Bereich) definiert werden kann, in dem die herzustellende Komponente ebenfalls den magnetischen Fluss gut leitet.

Es kann vorgesehen sein, dass bei dem obigen Blechlamellensatz der erste Bereich der ersten Blechlamelle als Polschuhblechabschnitt ausgebildet ist, der nach einem Stapeln der ersten und zweiten Blechlamellen einen Polschuh eines Läufers der elektrischen Maschine ausbildet, und der zweite Bereich der ersten Blechlamelle und die zweite Blechlamelle einem Jochblechabschnitt entsprechen, der nach einem Stapeln der ersten und zweiten Blechlamellen einen Jochabschnitt des Läufers der elektrischen Maschine ausbildet, wobei der Polschuhblechabschnitt und der Jochblechabschnitt der ersten Blechlamelle durch eine Taschenausnehmung getrennt sind und nur durch einen Verbindungsbereich miteinander verbunden sind, wobei die Taschenausnehmung nach dem Stapeln eine Tasche zur Aufnahme eines Permanentmagneten ausbildet.

Weiterhin kann sich der Faltbereich an den Polschuhblechabschnitt anschließen und in die Taschenausnehmung hineinreichen.

Gemäß einer Ausführungsform kann bei der Komponente für die elektrische Maschine der Faltabschnitt auf die Seite des ersten Bereichs der ersten Blechlamelle umgefaltet sein, wobei die erste und die zweite Blechlamelle aufeinander gestapelt sind, so dass die zweite Blechlamelle an dem zweiten Bereich der ersten Blechlamelle auf der Seite, auf die der Faltbereich auf den ersten Bereich umgefaltet ist, anliegt.

Weiterhin kann der Faltabschnitt mehrfach auf den ersten Bereich gefaltet sein, wobei die erste und die zweite Blechlamelle aufeinander gestapelt sind, so dass mehrere zweite Blechlamellen an dem zweiten Bereich der ersten Blechlamelle anliegen.

Gemäß einer weiteren Ausführungsform können der auf den ersten Bereich der ersten Blechlamelle gefaltete Faltabschnitt und der erste Bereich der ersten Blechlamelle jeweils einen Rand aufweisen, wobei die Ränder zumindest teilweise deckungsgleich bezüglich einer Richtung senkrecht zu einer Blechebene des ersten Bereichs sind.

Gemäß einem weiteren Aspekt ist ein Verfahren zum Herstellen einer Komponente für eine elektrische Maschine mit Hilfe des obigen Blechlamellensatzes vorgesehen, mit den folgenden Schritten:
- Bereitstellen der ersten und zweiten Blechlamellen;
- Umfalten des Faltabschnitts auf eine Seite des ersten Bereichs der ersten Blechlamelle;
- Stapeln der ersten und zweiten Blechlamellen, so dass eine der zweiten Blechlamellen an dem zweiten Bereich der ersten Blechlamelle auf der Seite, auf die der Faltbereich auf den ersten Bereich umgefaltet ist, anliegt.

Weiterhin kann nach dem Umfalten des Faltabschnitts ein einer Faltlinie gegenüberliegender Rand des Faltabschnitts abgetragen werden, so dass der Rand des Faltabschnitts zumindest teilweise deckungsgleich zu einem Rand des ersten Bereichs der ersten Blechlamelle verläuft.

Insbesondere kann vorgesehen sein, dass die ersten und die zweiten Blechlamellen im Wechsel gestapelt werden.

Es kann vorgesehen sein, dass nach dem Umfalten des Faltabschnitts ein dem Rand des ersten Bereichs einer Faltlinie gegenüberliegender Rand des Faltabschnitts bearbeitet wird, so dass der Rand des Faltabschnitts zumindest teilweise deckungsgleich zu einem Rand des ersten Bereichs der ersten Blechlamelle verläuft.

Gemäß einem weiteren Aspekt ist eine Verwendung des obigen Blechlamellensatzes zum Aufbau einer Komponente einer elektrischen Maschine, insbesondere eines Läufers einer rotatorischen elektrischen Maschine, vorgesehen.

### Kurzbeschreibung der Zeichnungen

Ausführungsformen der vorliegenden Erfindung werden nachfolgend anhand der beigefügten Zeichnungen näher erläutert. Es zeigen:
- Figur 1: eine schematische Querschnittsansicht einer rotatorischen elektrischen Maschine mit einem Innenläufer;
- Figur 2: eine Blechlamelle zum Aufbau des Innenläufers gemäß dem Stand der Technik;
- Figur 3: den Aufbau des Innenläufers für die elektrische Maschine nach Figur 1 mit aufeinander gestapelten Blechlamellen der Figur 2;
- Figur 4: eine Darstellung des Verlaufs von Feldlinien des magnetischen Flusses in einem Ausschnitt der elektrischen Maschine der Figur 1;
- Figur 5: einen Ausschnitt zur Darstellung der Geometrie einer Blechlamelle zum Aufbau einer Komponente gemäß der Erfindung;
- Figur 6: eine Darstellung eines Ausschnitts der Geometrie der Blechlamelle, nachdem ein Blechabschnitt umgeklappt worden ist und auf einem Polschuhblechabschnitt aufliegt;
- Figur 7: eine weitere Darstellung eines Abschnitts einer Blechlamelle gemäß einer weiteren Ausführungsform;
- Figur 8: eine Darstellung der Blechlamelle der Figur 7, bei der ein Blechabschnitt gemäß einer weiteren Ausführungsform umgebogen ist;
- Figur 9: eine perspektivische Darstellung einer Blechlamelle mit umgebogenen Blechabschnitten zum Bilden von Polschuhen;
- Figur 10: eine Darstellung einer weiteren Blechlamelle eines Blechlamellensatzes; und
- Figur 11: eine perspektivische Darstellung eines Läufers, der durch wechselweises Stapeln der Blechlamellen des Blechlamellensatzes aufgebaut ist.

### Beschreibung von Ausführungsformen

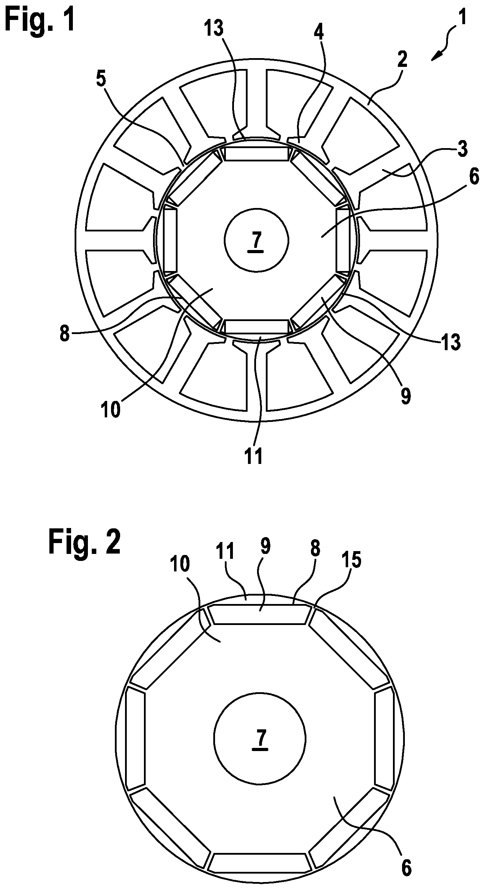

Figur 1 zeigt einen Querschnitt durch eine elektrische Maschine 1, die im vorliegenden Fall als rotatorische Synchronmaschine mit einem Innenläufer ausgebildet ist. Die elektrische Maschine 1 weist einen Stator 2 auf, der kreiszylindrisch ausgebildet ist und der nach innen weisende Statorzähne 3 umfasst. Die Statorzähne 3 verlaufen in radialer Richtung zu einer Achse der elektrischen Maschine 1 und sind an einem dem zylinderförmigen Teil des Stators 2 gegenüberliegenden Ende jeweils mit einem Zahnkopf 4 versehen. Die ins Innere gerichtete Außenkontur der Zahnköpfe 4 definiert eine kreiszylindrische Ausnehmung 5, in der ein Läufer 6 als Rotor konzentrisch drehbeweglich angeordnet ist, so dass sich dieser um die Achse der elektrischen Maschine drehen kann.

Der Läufer 6 ist an einer Welle 7 angeordnet, über die ein von der elektrischen Maschine 1 oder an die elektrische Maschine 1 bereitgestelltes Drehmoment übertragbar ist. Der Läufer 6, der detaillierter in Figur 2 dargestellt ist, ist im Wesentlichen mit einem kreiszylindrischen Querschnitt ausgebildet und weist Taschen 8 auf, in denen jeweils ein Permanentmagnet 9 angeordnet ist. Der Läufer 6 wird durch die Taschen 8 bzw. die darin angeordneten Permanentmagneten 9 in einen innenliegenden Jochabschnitt 10 und in einen jeweiligen den Rotorpolen zugeordneten in radialer Richtung außerhalb des Permanentmagneten 9 liegenden Polschuh 11 unterteilt.

Die Permanentmagneten 9 sind so in dem Läufer 6 angeordnet, dass zueinander benachbarte Permanentmagneten 9 eine bezüglich der radialen Richtung entgegengesetzte Polarisierung aufweisen. Somit dient der Jochabschnitt 10 des Läufers 6 als magnetischer Rückschluss für die Permanentmagneten 9 und der Polschuh 11 dient zur Bündelung des magnetischen Flusses in Richtung der Statorzähne 3, d.h. in Richtung eines zwischen dem Läufer 6 und den Statorzähnen 3 gebildeten Luftspalts 13.

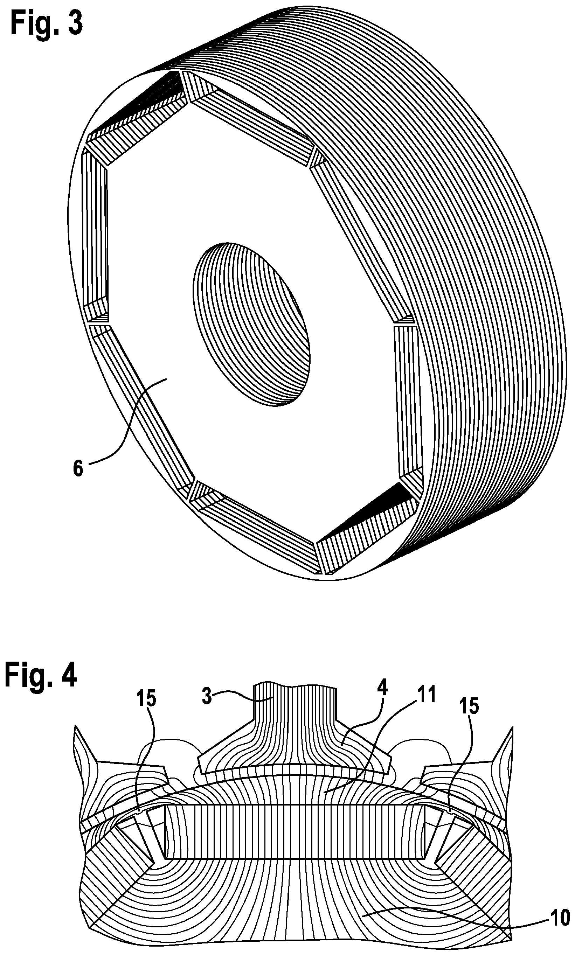

In Figur 3 ist eine perspektivische Darstellung des Läufers 6 ohne eingesetzte Permanentmagneten 9 dargestellt. Man erkennt, dass gemäß dem Stand der Technik der Läufer 6 durch Stapeln von gleichartigen Blechlamellen ausgeführt ist.

In Figur 4 ist der Verlauf des magnetischen Flusses anhand von Feldlinien dargestellt. Zum Einen verläuft ein Anteil des magnetischen Flusses über den Jochabschnitt 10 zwischen benachbarten Permanentmagneten 9 bzw. den zur Drehachse weisenden Polen von benachbarten Permanentmagneten 9 und zum Anderen verläuft ein Anteil des magnetischen Flusses durch den Polschuh 11 über den Luftspalt zu den Statorzähnen 3. Ein nicht unerheblicher Anteil des magnetischen Flusses verläuft über Brückenabschnitte 15 zwischen den Polschuhen 11 benachbarter Läuferpole, durch die die Polschuhe 11 an dem Läuferkörper (Jochabschnitt 10) gehalten werden. Der durch die Brückenabschnitte 15 verlaufende magnetische Fluss wird magnetischer Leckfluss genannt und ist unerwünscht, da er den von dem Permanentmagneten 9 bereitgestellten magnetischen Fluss reduziert und somit nicht zu der Erzeugung des Drehmoments der elektrischen Maschine 1 beiträgt. Daher ist es im Allgemeinen wünschenswert, den magnetischen Fluss in diesen Brückenabschnitten 15 zu reduzieren, was in der Regel durch eine Verringerung des effektiven Querschnitts an dieser Stelle erreicht wird. Eine Verringerung des Querschnitts der Brückenabschnitte ist jedoch nur bis zu einem bestimmten Maße zulässig, da aufgrund der Drehbewegung des Läufers 6 Zentrifugalkräfte auftreten und die Polschuhe 11 gegen die Zentrifugalkräfte an dem Läuferkörper gehalten werden müssen.

Um den effektiven Querschnitt der Brückenabschnitte 15 zu verringern, ohne jedoch den effektiven Querschnitt des Materials des Polschuhs 11 und des Materials des Jochabschnitts 10 zu verringern, wird nun vorgeschlagen, Blechlamellen vorzusehen, die gestapelt werden, um den Läufer 6 auszubilden.

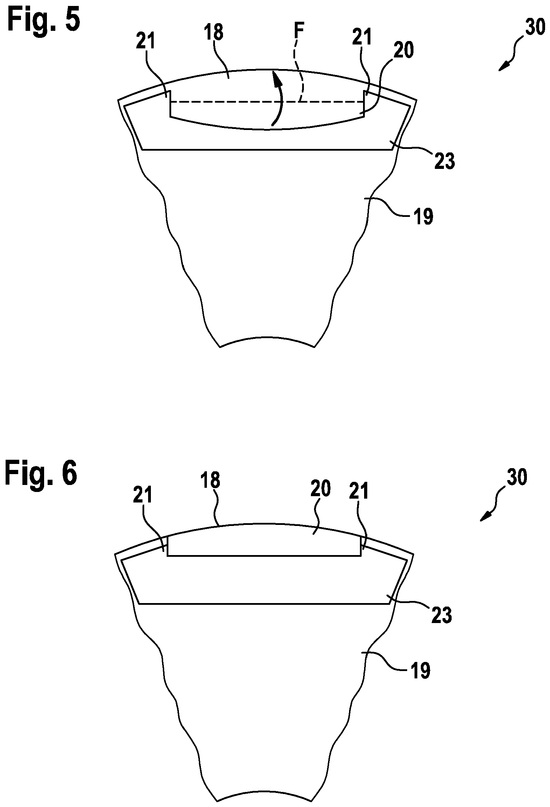

Ein Ausschnitt einer derartigen Blechlamelle ist als erste Blechlamelle 30 in Fig. 5 dargestellt. Figur 5 zeigt als Ausschnitt der ersten Blechlamelle zum Aufbau des Läufers 6 ein Segment mit einem Polschuhblechabschnitt 18 und einem Jochblechabschnitt 19, zwischen denen eine Taschenausnehmung 23 vorgesehen ist. Die erste Blechlamelle 30 wird durch geeignete Herstellungsverfahren, wie z.B. Stanzen, Laserschneiden oder dergleichen aus einem Blech magnetischen Materials (SMC) geschnitten bzw. hergestellt. Die Polschuhblechabschnitte 18 liegen nach dem Stapeln in axialer Richtung übereinander und bilden den Polschuh 11. Analog liegen die Jochblechabschnitte 19 nach dem Stapeln übereinander und bilden den Jochabschnitt 10. Die Taschenausnehmung 23 bildet im Wesentlichen den Bereich, der durch Stapeln der Blechlamellen die Tasche 8 ausbildet.

In die Taschenausnehmung 23 ragt ausgehend von dem Polschuhblechabschnitt 18 ein zusätzlicher Faltblechabschnitt 20 hinein, der, wie in Figur 6 dargestellt ist, nach dem Stanzprozess entlang der gestrichelten Falzlinie F, die sich im Wesentlichen in tangentialer Richtung erstreckt, umgefaltet wird und dadurch auf einem Bereich des Polschuhblechabschnitts 18 ganz oder teilweise zu liegen kommt.

Das Umfalten erfolgt so, dass deren aufeinander gefaltete, der Falzlinie F gegenüber liegenden Stanzränder deckungsgleich senkrecht zur Stanzebene aufeinander liegen. Die Faltkante bildet dann einen Abschnitt der Begrenzung der Ausnehmung, die in zusammengesetztem Zustand des Läufers 6 die Tasche 8 zur Aufnahme eines der Permanentmagneten 9 ausbildet.

Die nach dem Falten des Faltblechabschnitts 20 auf den Polschuhblechabschnitt 18 erzeugte Geometrie, die in Figur 6 gezeigt ist, zeigt, dass an den Enden des Faltblechabschnitts 20 in tangentialer Richtung der Polschuhblechabschnitt 18 Aussparungen 21 aufweist, die von der Taschenausnehmung 23 ausgehen und in radialer Richtung nach außen an den Seiten des Polschuhblechabschnitts 18 vorbei verlaufen. Diese Aussparungen 21 sollen den Faltprozess entlang der Falzlinie F vereinfachen. Vorzugsweise ist der Faltblechabschnitt 20 deckungsgleich zu dem entsprechenden Bereich des Polschuhblechabschnitts 18 ausgebildet, so dass durch Umklappen entlang der Falzlinie F der Faltblechabschnitt 20 deckungsgleich auf dem Polschuhabschnitt 18 zu liegen kommt.

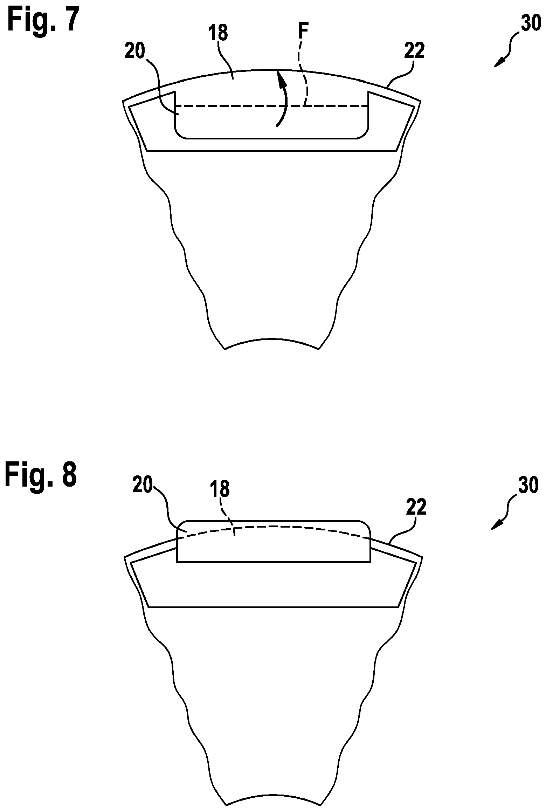

In der Ausführungsform, die in den Figuren 7 und 8 dargestellt ist, ist der Faltblechabschnitt 20 mit einer zu dem Polschuhblechabschnitt 18 unterschiedlichen Geometrie ausgebildet. Nach dem Falten entlang der Falzlinie F steht der gefaltete Faltblechabschnitt 20 in diesem Fall über den äußeren Rand 22 der gestanzten ersten Blechlamelle 30 über und muss in einem nachfolgenden Prozess entweder durch Schneiden oder Abfräsen entfernt werden, um eine Polschuhoberfläche zu erhalten, die eine Kontur aufweist, die der gewünschten Krümmung bzw. Kontur der Polschuhe des herzustellenden Läufers 6 entspricht. Selbstverständlich ist es auch möglich, dass nach dem Falten der Polschuhblechabschnitt 18 in radialer Richtung weiter nach außen absteht als der gefaltete Faltblechabschnitt 20. In diesem Fall kann auch der überstehende Teil des Polschuhblechabschnitts 18 in entsprechender Weise entfernt bzw. bearbeitet werden.

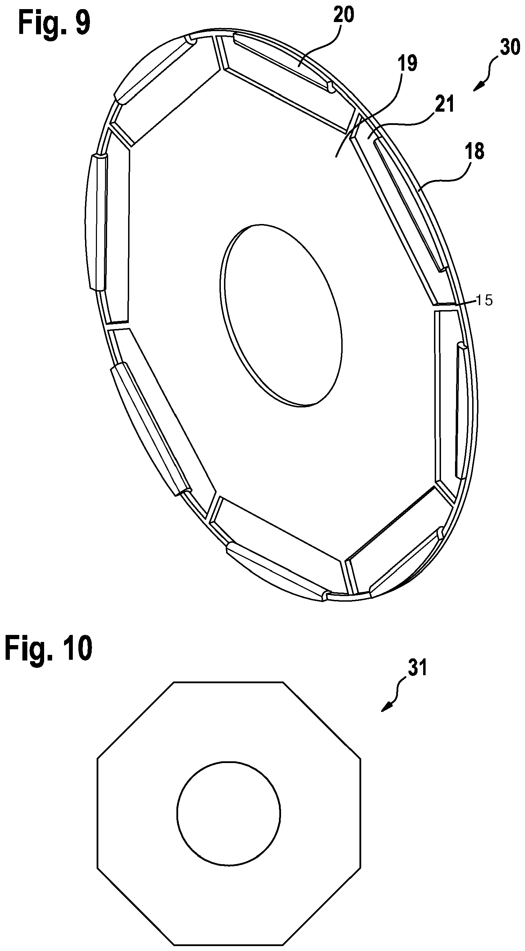

In Figur 9 ist eine perspektivische Darstellung einer ersten Blechlamelle 30 mit gefalteten Faltblechabschnitten 20, die Polschuhblechabschnitte 18 an den Ausnehmungen zur Ausbildung der Taschen 8 aufweisen, gezeigt. Beim Stapeln derartiger Blechlamellen würde sich jedoch gegenüber dem herkömmlichen Aufbau des Läufers 6 der effektive Querschnitt des Jochabschnitts 10 verringern, da die gefalteten Faltabschnitte 20 die aufeinander gestapelten Lamellenbleche voneinander beabstanden würden. Daher ist vorgesehen, eine zweite Blechlamelle 31 mit einer von der ersten Blechlamelle 30 unterschiedlichen Geometrie vorzusehen, die in Figur 10 dargestellt ist.

Figur 10 zeigt eine Geometrie der zweiten Blechlamelle 31, die der Geometrie des Jochabschnitts 10 des Läufers 6 entspricht, ohne dass die Polschuhabschnitte 11 daran ausgebildet sind. Werden die erste Blechlamelle 30 und die zweite Blechlamelle 31 jeweils im Wechsel aufeinander aufgesetzt, so dass die zweite Blechlamelle 31 auf der Seite der ersten Blechlamelle 30 aufgesetzt wird, auf die die Faltabschnitte 20 gefaltet sind, so kann durch Stapeln solcher Anordnungen ein Läufer 6 aufgebaut werden, bei dem der effektive Querschnitt der Brückenabschnitte 15 gegenüber einem herkömmlich aufgebauten Läufer 6 reduziert ist. Dies liegt daran, dass die ersten Blechlamellen 30 wechselweise mit den zweiten Blechlamellen 31 gestapelt werden, die jedoch keinen Brückenabschnitt 15 aufweisen. Die zweiten Blechlamellen 31 weisen zwar auch keinen Polschuhabschnitt 18 auf, dieser wird jedoch von den ersten Blechlamellen 30 gebildet, indem ein nicht herausgeschnittener (herausgestanzter) Faltabschnitt 20 des Lamellenblechs auf den Polschuhabschnitt 18 gefaltet wird, so dass der Faltabschnitt 20 fest mit dem Polschuhabschnitt 18 verbunden bleibt und gleichzeitig die Dicke des Polschuhabschnitts 18 verdoppelt wird.

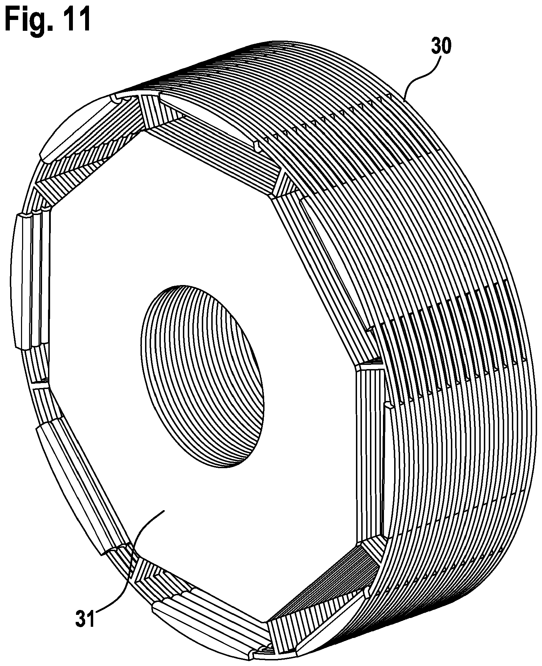

In Figur 11 ist eine perspektivische Darstellung eines mit den ersten und zweiten Blechlamellen 30, 31 aufgebauten Läuferkörpers ohne Permanentmagneten gezeigt. Man erkennt, dass durch das Stapeln der Blechlamellen 30, 31 nur jede zweite Materiallage im Bereich der Brückenabschnitte 15 vorhanden ist, so dass der effektive Querschnitt der Bleche, die den magnetischen Fluss leiten, halbiert ist, während in anderen Bereichen jede Lamellenlage ausgefüllt ist.

Gemäß weiteren Ausführungsformen kann vorgesehen sein, den Faltblechabschnitt 20 so vorzusehen, dass mehrere Faltungen möglich sind, um die Dicke der so erhaltenen Blechlamelle im Bereich des Polschuhs nicht nur zu verdoppeln, sondern zu verdrei- oder zu vervierfachen. Dazu kann der Faltblechabschnitt 20 um mehrere Faltlinien F gefaltet werden, an denen die Blechlamelle jeweils in die entgegengesetzte Richtung zur vorangehenden Faltung oder jedes Mal in die gleiche Richtung gefaltet wird. Auch eine Faltung über die Außenkanten der ersten Blechlamelle ist denkbar, solange die sich ergebende Kontur der Polschuhe 4 an eine gewünschte Kontur anpassbar ist.

Anstelle des Läufers 6 können auch andere Komponenten einer elektrischen Maschine, insbesondere diejenigen, die zum Leiten eines magnetischen Flusses vorgesehen sind, in dieser Weise ausgebildet sein. Auch ist die vorliegende Erfindung nicht auf Innenläufer von rotatorischen elektrischen Maschinen beschränkt, sondern kann auch auf Läufer oder Statoren von translatorischen elektrischen Maschinen oder Außenläufermotoren angewendet werden.

## Patentansprüche

1. Blechlamellensatz für den Aufbau einer Komponente (6) für eine elektrische Maschine (1), mit einer ersten Blechlamelle (30), die einen ersten Bereich (18) und einen zweiten Bereich (19) aufweist, die über einen Verbindungsabschnitt (15) miteinander verbunden sind, und mit einer zweiten Blechlamelle (31), deren Geometrie im Wesentlichen der Geometrie des zweiten Bereichs (19) entspricht;
wobei die erste Blechlamelle (30) einen Faltbereich (20) aufweist, der ganz oder teilweise auf eine Seite des ersten Bereichs (18) der Blechlamelle (30), geeignet zur Verringerung von magnetischen Leckflüssen im Verbindungsbereich (15) und zur Erhöhung der mechanischen Stabilität der Komponente (6), umfaltbar ist.

2. Blechlamellensatz nach Anspruch 1, wobei der erste Bereich (18) der ersten Blechlamelle (30) als Polschuhblechabschnitt ausgebildet ist, der nach einem Stapeln der ersten und zweiten Blechlamellen (30, 31) einen Polschuh eines Läufers (6) der elektrischen Maschine (1) ausbildet, und der zweite Bereich (19) der ersten Blechlamelle (30) und die zweite Blechlamelle (31) einem Jochblechabschnitt entsprechen, der nach einem Stapeln der ersten und zweiten Blechlamellen (30, 31) einen Jochabschnitt des Läufers (6) der elektrischen Maschine (1) ausbildet,
wobei der Polschuhblechabschnitt und der Jochblechabschnitt der ersten Blechlamelle (30) durch eine Taschenausnehmung (23) getrennt sind und nur durch einen Verbindungsbereich (15) miteinander verbunden sind, wobei die Taschenausnehmung (23) nach dem Stapeln eine Tasche (8) zur Aufnahme eines Permanentmagneten (9) ausbildet.

3. Blechlamellensatz nach Anspruch 2, wobei der Faltbereich (20) sich an den Polschuhblechabschnitt anschließt und in die Taschenausnehmung (23) hineinreicht.

4. Komponente (6) für eine elektrische Maschine (1), die mit dem Blechlamellensatz einer der Ansprüche 1 bis 3 aufgebaut ist,
wobei der Faltabschnitt (20) auf die Seite des ersten Bereichs (18) der ersten Blechlamelle (30) umgefaltet ist,
wobei die erste und die zweite Blechlamelle (30, 31) aufeinander gestapelt sind, so dass die zweite Blechlamelle (31) an dem zweiten Bereich (19) der ersten Blechlamelle (30) auf der Seite, auf die der Faltbereich auf den ersten Bereich (18) umgefaltet ist, anliegt.

5. Komponente (6) nach Anspruch 4, wobei der Faltabschnitt mehrfach auf den ersten Bereich gefaltet ist, wobei die erste und die zweite Blechlamelle (30, 31) aufeinander gestapelt sind, so dass mehrere zweite Blechlamellen (31) an dem zweiten Bereich (19) der ersten Blechlamelle (30) anliegen.

6. Komponente (6) nach Anspruch 4 oder 5, wobei der auf den ersten Bereich (18) der ersten Blechlamelle (30) gefaltete Faltabschnitt (20) und der erste Bereich (18) der ersten Blechlamelle (30) jeweils einen Rand aufweisen, wobei die Ränder zumindest teilweise deckungsgleich bezüglich einer Richtung senkrecht zur Ebene des ersten Bereichs (18) sind.

7. Verfahren zum Herstellen einer Komponente (6) für eine elektrische Maschine (1) mit Hilfe des Blechlamellensatzes gemäß einem der Ansprüche 1 bis 3, mit den folgenden Schritten:
- Bereitstellen der ersten und zweiten Blechlamellen (30, 31, wobei die erste Blechlamelle (30) einen ersten Bereich (8) und einen zweiten Bereich (19) aufweist, die über einen Verbindungsabschnitt (15) miteinander verbunden sind, und die Geometrie der zweiten Blechlamelle (31) im Wesentlichen der Geometrie des zweiten Bereichs (19) der ersten Blechlamelle (30) entspricht und die erste Blechlamelle (30) einen Faltbereich (20) aufweist, der ganz oder teilweise auf eine Seite des ersten Bereichs (18) der Blechlamelle (30) umfaltbar ist;
- Umfalten des Faltabschnitts (20) auf eine Seite des ersten Bereichs (18) der ersten Blechlamelle (30);
- Stapeln der ersten und zweiten Blechlamellen (30, 31), so dass eine der zweiten Blechlamellen (31) an dem zweiten Bereich (19) der ersten Blechlamelle (30) auf der Seite, auf die der Faltbereich (20) auf den ersten Bereich (18) umgefaltet ist, anliegt.

8. Verfahren nach Anspruch 7, wobei nach dem Umfalten des Faltabschnitts ein einer Faltlinie (F) gegenüberliegender Rand des Faltabschnitts bearbeitet wird, so dass der Rand des Faltabschnitts zumindest teilweise deckungsgleich zu einem Rand des ersten Bereichs der ersten Blechlamelle verläuft.

9. Verfahren nach Anspruch 7 oder 8, wobei die ersten und die zweiten Blechlamellen im Wechsel gestapelt werden.

10. Verwendung des Blechlamellensatzes gemäß einem der Ansprüche 1 bis 3 zum Aufbau einer Komponente einer elektrischen Maschine, insbesondere eines Läufers einer rotatorischen elektrischen Maschine.

## Claims

1. Set of sheet-metal laminations for constructing a component (6) for an electrical machine (1), comprising a first sheet-metal lamination (30) which has a first region (18) and a second region (19), which regions are connected to one another by means of a connecting section (15), and comprising a second sheet-metal lamination (31), the geometry of which corresponds substantially to the geometry of the second region (19);
wherein the first sheet-metal lamination (30) has a fold region (20) which can be entirely or partially folded over onto a side of the first region (18) of the sheet-metal lamination (30) in a manner suitable for reducing magnetic leakage fluxes in the connecting region (15) and for increasing the mechanical stability of the component (6) .

2. Set of sheet-metal laminations according to Claim 1, wherein the first region (18) of the first sheet-metal lamination (30) is designed as a pole shoe sheet-metal section which, following stacking of the first and second sheet-metal laminations (30, 31), forms a pole shoe of a rotor (6) of the electrical machine (1), and the second region (19) of the first sheet-metal lamination (30) and the second sheet-metal lamination (31) correspond to a yoke sheet-metal section which, following stacking of the first and second sheet-metal laminations (30, 31), forms a yoke section of the rotor (6) of the electrical machine (1),
wherein the pole shoe sheet-metal section and the yoke sheet-metal section of the first sheet-metal lamination (30) are separated by a pocket recess (23) and are connected to one another only by a connecting region (15), wherein the pocket recess (23), following the stacking, forms a pocket (8) for accommodating a permanent magnet (9).

3. Set of sheet-metal laminations according to Claim 2, wherein the fold region (20) adjoins the pole shoe sheet-metal section and extends into the pocket recess (23) .

4. Component (6) for an electrical machine (1), which component is constructed using the set of sheet-metal laminations of one of Claims 1 to 3,
wherein the fold section (20) is folded over onto the side of the first region (18) of the first sheet-metal lamination (30),
wherein the first and the second sheet-metal lamination (30, 31) are stacked one on the other, so that the second sheet-metal lamination (31) rests on the second region (19) of the first sheet-metal lamination (30) on the side onto which the fold region is folded over onto the first region (18).

5. Component (6) according to Claim 4, wherein the fold section is folded onto the first region several times, wherein the first and the second sheet-metal lamination (30, 31) are stacked one on the other, so that a plurality of second sheet-metal laminations (31) rest on the second region (19) of the first sheet-metal lamination (30).

6. Component (6) according to Claim 4 or 5, wherein the fold section (20), which is folded onto the first region (18) of the first sheet-metal lamination (30), and the first region (18) of the first sheet-metal lamination (30) each have an edge, wherein the edges are at least partially congruent with respect to a direction perpendicular to the plane of the first region (18).

7. Method for producing a component (6) for an electrical machine (1) with the aid of the set of sheet-metal laminations according to one of Claims 1 to 3, comprising the following steps:
- providing the first and second sheet-metal laminations (30, 31), wherein the first sheet-metal lamination (30) has a first region (8) and a second region (19), which regions are connected to one another by means of a connecting section (15), and the geometry of the second sheet-metal lamination (31) corresponds substantially to the geometry of the second region (19) of the first sheet-metal lamination (30), and the first sheet-metal lamination (30) has a fold region (20) which can be entirely or partially folded over onto a side of the first region (18) of the sheet-metal lamination (30);
- folding the fold section (20) over onto a side of the first region (18) of the first sheet-metal lamination (30);
- stacking the first and second sheet-metal laminations (30, 31), so that one of the second sheet-metal laminations (31) rests on the second region (19) of the first sheet-metal lamination (30) on the side onto which the fold region (20) is folded over onto the first region (18) .

8. Method according to Claim 7, wherein, following folding over of the fold section, an edge of the fold section, which edge is opposite a fold line (F), is machined, so that the edge of the fold section runs at least partially congruently to an edge of the first region of the first sheet-metal lamination.

9. Method according to Claim 7 or 8, wherein the first and the second sheet-metal laminations are stacked alternately.

10. Use of the set of sheet-metal laminations according to one of Claims 1 to 3 for constructing a component of an electrical machine, in particular a rotor of a rotary electrical machine.

## Revendications

1. Ensemble de lamelles en tôle pour l'assemblage d'un composant (6) pour une machine électrique (1) comprenant une première lamelle en tôle (30) qui présente une première région (18) et une deuxième région (19) qui sont connectées l'une à l'autre par le biais d'une portion de liaison (15) et comprenant une deuxième lamelle en tôle (31) dont la géométrie correspond essentiellement à la géométrie de la deuxième région (19) ;
la première lamelle en tôle (30) présentant une région de pliage (20) qui peut être repliée complètement ou partiellement sur un côté de la première région (18) de la lamelle en tôle (30), apte à réduire les flux de fuite magnétiques dans la région de liaison (15) et à augmenter la stabilité mécanique du composant (6).

2. Ensemble de lamelles en tôle selon la revendication 1, dans lequel la première région (18) de la première lamelle en tôle (30) est réalisée sous forme de portion en tôle de pièce polaire qui constitue, après un empilement de la première et de la deuxième lamelle en tôle (30, 31), une pièce polaire d'un rotor (6) de la machine électrique (1), et la deuxième région (19) de la première lamelle en tôle (30) et la deuxième lamelle en tôle (31) correspondent à une portion en tôle de culasse qui constitue, après un empilement de la première et de la deuxième lamelle en tôle (30, 31), une portion de culasse du rotor (6) de la machine électrique (1),
la portion en tôle de pièce polaire et la portion en tôle de culasse de la première lamelle en tôle (30) étant séparées par un évidement de cavité (23) et étant seulement connectées l'une à l'autre par une région de liaison (15), l'évidement de cavité (23) constituant après l'empilement une cavité (8) pour recevoir un aimant permanent (9).

3. Ensemble de lamelles en tôle selon la revendication 2, dans lequel la région de pliage (20) se raccorde à la portion en tôle de pièce polaire et pénètre dans l'évidement de cavité (23) .

4. Composant (6) pour une machine électrique (1) qui est construit avec l'ensemble de lamelles en tôle selon l'une des revendications 1 à 3, la portion de pliage (20) étant repliée du côté de la première région (18) de la première lamelle en tôle (30),
la première et la deuxième lamelle en tôle (30, 31) étant empilées l'une sur l'autre de telle sorte que la deuxième lamelle en tôle (31) s'applique contre la deuxième région (19) de la première lamelle en tôle (30) du côté au niveau duquel la région de pliage est repliée sur la première région (18).

5. Composant (6) selon la revendication 4, dans lequel la portion de pliage est pliée plusieurs fois sur la première région, la première et la deuxième lamelle en tôle (30, 31) étant empilées l'une sur l'autre de telle sorte que plusieurs deuxièmes lamelles en tôle (31) s'appliquent contre la deuxième région (19) de la première lamelle en tôle (30).

6. Composant (6) selon la revendication 4 ou 5, dans lequel la portion de pliage (20) pliée sur la première région (18) de la première lamelle en tôle (30) et la première région (18) de la première lamelle en tôle (30) présentent chacune un bord, les bords étant au moins en partie en coïncidence par rapport à une direction perpendiculaire au plan de la première région (18) .

7. Procédé de fabrication d'un composant (6) pour une machine électrique (1) à l'aide de l'ensemble de lamelles en tôle selon l'une quelconque des revendications 1 à 3, comprenant les étapes suivantes :
- fourniture de la première et de la deuxième lamelle en tôle (30, 31), la première lamelle en tôle (30) présentant une première région (8) et une deuxième région (19), qui sont connectées l'une à l'autre par le biais d'une portion de liaison (15), et la géométrie de la deuxième lamelle en tôle (31) correspondant essentiellement à la géométrie de la deuxième région (19) de la première lamelle en tôle (30) et la première lamelle en tôle (30) présentant une région de pliage (20) qui peut être repliée complètement ou partiellement sur un côté de la première région (18) de la lamelle en tôle (30);
- repliement de la portion de pliage (20) sur un côté de la première région (18) de la première lamelle en tôle (30) ;
- empilement de la première et de la deuxième lamelle en tôle (30, 31), de telle sorte que l'une des deuxièmes lamelles en tôle (31) s'applique contre la deuxième région (19) de la première lamelle en tôle (30) du côté au niveau duquel la région de pliage (20) est repliée sur la première région (18).

8. Procédé selon la revendication 7, dans laquelle, après le repliement de la portion de pliage, un bord de la portion de pliage opposé à une ligne de pliage (F) est traité de telle sorte que le bord de la portion de pliage s'étende de manière à coïncider au moins en partie avec un bord de la première région de la première lamelle en tôle.

9. Procédé selon la revendication 7 ou 8, dans lequel les premières et les deuxièmes lamelles en tôle sont empilées en alternance.

10. Utilisation de l'ensemble de lamelles en tôle selon l'une quelconque des revendications 1 à 3 pour l'assemblage d'un composant d'une machine électrique, en particulier d'un rotor d'une machine électrique rotative.
